# EUROPEAN PATENT SPECIFICATION

(11) **EP 2 852 094 B1**
(45) Date of publication and mention of the grant of the patent: **23.03.2016**
(21) Application number: 13185548.8
(22) Date of filing: 23.09.2013
(51) Int. Cl.: H04L 12/24, H04L 12/10

(54) **A system for remotely controlling and/or monitoring power distribution units or sensor units in a data centre**
System zur Fernsteuerung und/oder Überwachung von Stromverteilungseinheiten oder Sensoreinheiten in einer Datenzentrale
Système pour commander à distance et/ou surveiller des unités de distribution d'énergie ou des unités de capteur dans un centre de données

(43) Date of publication of application: 25.03.2015
(73) Proprietor: Racktivity NV, 9080 Lochristi (BE)
(72) Inventor: Leune, Robert, 9040 Sint-Amandsberg (BE); Vinken, Niko, 8570 Anzegem (BE)
(74) Representative: Plas, Axel Ivo Michel

(56) References cited:
- EP-A1- 2 202 914
- EP-A1- 2 624 375
- EP-A2- 2 101 237
- US-A1- 2011 022 245

## Description

### Field of the Invention

The present invention generally relates to remotely monitoring and controlling numerous power distribution units (PDUs) and/or sensors in a data centre. The invention in particular aims at enabling remotely monitoring and controlling PDUs and/or sensors with improved latency/throughput, increased flexibility, and reduced network connectivity costs.

### Background of the Invention

A data centre is a telecommunications equipment hosting facility that typically hosts a few tens up to thousands of computers, e.g. servers, routers, switches, etc. These computers are organized in so called racks or cabinets. Each rack or cabinet in a data centre is equipped with one or several Power Distribution Units or PDUs, i.e. a device that distributes electrical power, typically AC power, to the computing equipment in the rack.

Traditionally, PDUs have been rather simple, dummy devices, only containing power inputs, power outputs, circuit breakers and switches. PDUs used to have no instrumentation and they were not manageable. As a consequence, recovery from a power failure where one or several computers in a data centre were affected, used to be slow because intervention by technicians in the data centre was required.

More recently, functionality enabling remote monitoring and controlling has been integrated in PDUs. This has resulted in smart PDUs, also called data centre management units (DCMUs) that can be monitored and controlled remotely by the data centre operator. Such smart PDUs for instance have sensors for current, voltage and/or power as a result of which they can be metered remotely and individual outlets can be switched on or off remotely. Such a PDU typically features means for remote access such as one or several Ethernet ports and each such PDU is configured to be reachable through an own Internet Protocol (IP) address. This way, the data centre administrator is enabled to access the PDU from a remote terminal or interface in order to meter certain parameters, turn on/off power outlets, schedule power shutdowns, control the load, etc.

In addition to the sensors integrated in smart PDUs, a data centre may be equipped with a variety of other sensors, like temperature sensors, humidity sensors, etc., that measure certain parameters at rack, isle or data centre level. Also these sensors may be provided with Ethernet ports to be remotely readable and/or controllable.

Configuring each PDU and each sensor in a data centre with its own IP address and network connectivity to an external IP network is expensive and complex to manage. It requires a large number of IP addresses, additional wiring towards each PDU/sensor and additional computational resources in each PDU/sensor, resulting in inefficient use of expensive resources. In addition, it does not allow internal communication between PDUs/sensors in a data centre.

This problem of inefficient use of resources has been recognized for instance in paragraph [0005] of United States Patent Application US 2010/0198535 entitled "Power Distribution Unit Monitoring Network and Components". In order to tackle this problem, US 2010/0198535 proposes to couple the PDUs (104) and a gateway (108) in a daisy chain. The PDUs and the gateway are individually addressable using a token based addressing system, different from IP, as a result of which the PDUs no longer need to have resources capable to process IP packets. The gateway 108 is needed to translate the protocol that is used in the internal network 100 towards Ethernet/IP that is used in the external network 102.

The prior art system known from US 2010/0198535 is disadvantageous for several reasons. Firstly, it provides limited flexibility in connectivity since the PDUs no longer can be connected directly to the external IP based network. Each IP packet received from the external IP network 102 must be processed by the gateway 108 which has a negative impact on throughput and latency. Secondly, the token based proprietary protocol that is used in the internal network 100 further increases the latency and further reduces the throughput in the remote communication with PDUs. Moreover, this protocol does not allow point-to-point communication between PDUs in the internal network 100.

A straightforward solution for the limited flexibility in connectivity lies in the integration of a gateway similar to 108 into each one of the PDUs. This would bring the advantage that each PDU would again individually be connectable to the external IP network 102 at the cost of providing gateway functionality per PDU, but it would leave the above mentioned problems of throughput, latency and point-to-point connectivity unresolved.

Apart from the above mentioned drawbacks, US 2010/0198535 does not recognize the problem of a potential failure or outage of a single PDU or a link between two neighbouring PDUs in the daisy chain network 100 as a result of which other PDUs may become unreachable.

European Patent Application EP2202914A1 entitled "Power over Ethernet in a Redundant Ring Data Network" describes a power supply solution for controllers, I/O modules, sensors and actuators used in an industrial control system (see EP2202914A1 paragraph [0001]). The power supply solution consists of an Power over Ethernet (PoE) ring where all devices are connected to. Each device in the PoE ring receives power on a first port and supplies power on a second port. The receiving port provides power to both the device itself and the supplying port (see EP2202914A1, paragraph [0026]). The solution of EP2202914A1 brings the advantage that a single power source, i.e. PoE switch 8, can supply power to all devices in the industrial process.

It is therefore an objective of the present invention to provide a system for remotely monitoring and/or controlling PDUs and/or sensors in a data centre that resolves the above-identified shortcomings of the prior art. More particularly, it is an objective of the present invention to provide a system for remotely monitoring and/or controlling PDUs and/or sensors in a data centre with maximized flexibility in connectivity to external IP networks and optimized used of costly resources such as IP addresses without negatively impacting the throughput and latency for remote communication with the PDUs and/or sensors. It is a further objective of the present invention to provide such a system that further allows point-to-point communication between PDUs and/or sensors over the internal network in the data centre. It is yet another objective of the present invention to provide such a system that is reliable, even in case of an outage of a single or a few PDUs, or a link between two PDUs.

### Summary of the Invention

According to the present invention, the above identified objectives are realized by the system for remotely monitoring and/or controlling a plurality of power distribution units and/or sensor units in a data centre as defined by claim 1, the system comprising:
- in each one of the plurality of power distribution units and/or sensor units a switch having a first external Ethernet port, a second internal Ethernet port, and a third external Ethernet port; and
- a daisy chain network comprising the plurality of power distribution units and/or sensor units as nodes, wherein the third external Ethernet port of each node is connected to the first external Ethernet port of a following node in the daisy chain network,
and wherein furthermore:
- the switch in each one of the plurality of power distribution units and/or sensor units is adapted to inspect, in an incoming data packet received at its first external Ethernet port, a destination node identification field contained in a layer higher than or equal to the Ethernet/IP layer, and the switch is further adapted to switch the incoming data packet to its second internal Ethernet port if the node identification field contains the node number in the daisy chain network of the power distribution unit and/or sensor unit where the switch forms part of, and to switch the incoming data packet to its third external Ethernet port if the node identification field contains a different node number.

Thus, the invention resides in daisy-chaining the PDUs and/or sensors via Ethernet ports and links, providing a higher or equal layer addressing mechanism for the nodes in the daisy chain, and integrating a three-port switch in each PDU and/or sensor that switches incoming Ethernet packets either to an internal port or to the next hop node in the daisy chain based on the contents of a higher layer or equal layer destination address field. It is noticed that the three-port switch integrated in each PDU and/or sensor according to the present invention may have more than three ports: this switch must have at least one internal port and at least two external ports, but it is not excluded to have for instance more than two external ports. It is further also noticed that the terms "first", "second" and "third" when referring to the ports can be used interchangeably. These terms do not represent a particular order but rather represent a naming for the ports of the switch. In particular the first and third external Ethernet ports are equivalent and consequently can be interchanged from one PDU/sensor to another. A further remark relates to the layer containing the destination address field. This may be the Ethernet/IP layer in case of for instance IPv4 or IPv6 where an optional field can be used to convey the number or identification of the destination node. Alternatively, the number or identification of the destined PDU/sensor can be conveyed in a field at a higher layer. The system according to the invention does not involve a gateway, and certainly not a gateway per PDU/sensor, hence reducing the complexity and cost in comparison to the closest prior art solutions. Since the Ethernet/IP protocols used in the external network need no longer be converted by a gateway to a proprietary protocol used internally in the data centre, the latency for monitoring and/or controlling PDUs and/or sensors is reduced. Consequently, the throughput is increased. The system according to the present invention further brings tremendous advantages in terms of flexibility: each of the PDUs/sensors can be connected directly via its external Ethernet ports to the external IP based network. Any single one of the PDUs/sensors can be assigned an IP address, can be connected directly to the external IP network, and can act as master for receiving/transmitting packets for/from the other PDUs/sensors in the daisy chain. The master has to be aware of the internal, higher or equal layer addressing scheme. It shall learn the node identifications of the PDUs/sensors in the daisy chain and it shall communicate these node identifications to the data centre operator platform such that these node identifications can be used in the higher or equal layer destination node identification field when IP data packets are exchanged with the PDUs/sensors. If for some reason it is desired to configure also additional PDUs/sensors with an own IP address, this is possible and such PDUs/sensors can be connected directly to the external IP network. The fact that a single protocol, i.e. Ethernet/IP, is used in the external network and the internal network in the data centre delivers this flexibility. Moreover, tens to hundreds or even thousands of PDUs/sensors can be daisy-chained according to the present invention, making these PDUs/sensors act as a cluster that can be monitored and/or controlled through a single IP address.

Following a further aspect of the system for remotely monitoring and/or controlling a plurality of power distribution units and/or sensor units in a data centre according to the present invention, as defined by claim 2, the system comprises a discovery function adapted to learn the node numbers of the nodes in the daisy chain network, the discovery function comprising:
- a discovery message generator adapted to generate a discovery message containing an integer hop count value;
- a discovery message transmitter adapted to send the discovery message through the daisy chain network;
- a discovery message processor in each one of the plurality of power distribution units and/or sensor units, the discovery message processor being adapted to receive the discovery message, to reduce the hop count value by one if the hop count value in the discovery message is larger than one, and to report the node number of the power distribution unit and/or sensor unit where it forms part of if the hop count value in the discovery message equals one.

Indeed, the present invention preferably incorporates an automated node discovery function to learn which PDU and/or sensor represents which node in the daisy chain instead of a semi-automated procedure that would involve for instance manual jumper setting on the PDUs/sensors to identify their position in the daisy chain, or a non-automated procedure that would involve manual inspection and inventory of the position of the PDUs/sensors in the daisy chain. In one possible implementation of the automated node discovery function, the master generates and sends discovery messages in the daisy chain. A discovery messages is generated with an initial hop count value, and the nodes in the daisy chain reduce the hop count value of a received discovery message by one before forwarding the discovery message to the next node in the daisy chain. When a node receives a discovery message whose hop count value equals one, that node no longer forwards the discovery message with reduced hop count value to the next node in the daisy chain. Instead, such node sends a response identifying itself to the master. The node for instance reports its port number to the master. By repeating this process for successive initial integer hop count values, the master can learn the port numbers or node identification numbers and positions of all nodes in the daisy chain.

In a preferred embodiment of the system for remotely monitoring and/or controlling a plurality of power distribution units and/or sensor units in a data centre according to the present invention, defined by claim 3, each one of the power distribution units and/or sensor units is configured with a node number, and a single one of the power distribution units and/or sensor units is configured with an Internet Protocol (IP) address.

Thus, a single IP address and an internal node number scheme are sufficient to maintain remote accessibility to all PDUs and/or sensors. The PDU/sensor unit that is configured with the single IP address becomes the master node with direct connectivity to the external IP network, while all other nodes become indirectly accessible via the higher or equal layer node numbering in the daisy chain. It is noticed that data packets destined for a particular node in the chain need to convey the node number. Data packets however also may be sent without destination node number. Such data packets will arrive at the master node which will process such data packets without forwarding them into the daisy chain.

In an alternative embodiment of the system for remotely monitoring and/or controlling a plurality of power distribution units and/or sensor units in a data centre according to the present invention, defined by claim 4, each one of the power distribution units and/or sensor units is configured with a node number, and two of the power distribution units and/or sensor units are configured with respectively a first Internet Protocol (IP) address and a second Internet Protocol (IP) address.

Thus, to maintain remote accessibility of at least part of the nodes in the daisy chain when the daisy chain gets broken, two nodes may be configured with an IP address. These two nodes, which both can act as master in the daisy chain, may for instance be the first and last node in the daisy chain. In case of a single point of failure, e.g. as a result of a failing link between two successive nodes in the daisy chain or as a result of unavailability of one of the two IP addresses, all nodes eventually except the failing node, remain remotely accessible. In case an intermediate node or link constitutes a single point of failure, a first part of the nodes remains remotely accessible via the first master node configured with the first IP address whereas the other part of the nodes remains remotely accessible via the second master node configured with the second IP address. In case the first master node fails, all nodes except the first master node remain accessible via the second master node configured with the second IP address. In case the second master node fails, all nodes except the second master node remain accessible via the first master node configured with the first IP address. In addition, knowledge of the positions of the nodes in the daisy chain and knowledge of the master node / IP address through which the different nodes remain accessible enables to remotely detect that there is a point of failure and to detect the position of the single point if failure in the daisy chain. This allows quick intervention and resolution of a single point of failure, as opposed to the gateway based prior art solution wherein a single point of failure is not locatable and results in at least part of the nodes being non-accessible. Summarizing, at the cost of a second IP address, redundancy providing resistance against a single point of failure in the daisy chain is offered.

According to an optional aspect defined by claim 5, the system for remotely monitoring and/or controlling a plurality of power distribution units and/or sensor units in a data centre according to the present invention further comprises:
- a second plurality of redundant power distribution units and/or sensor units as nodes;
- in each one of the second plurality of redundant power distribution units and/or sensor units a switch having a first external Ethernet port, a second internal Ethernet port, and a third external Ethernet port; and
- a redundant daisy chain network comprising the second plurality of power distribution units and/or sensor units as nodes, wherein the third external Ethernet port of each node is connected to the first external Ethernet port of a following node in the redundant daisy chain network,
and wherein furthermore:
- the switch in each one of the second plurality of power distribution units and/or sensor units is adapted to inspect, in an incoming data packet received at its first external Ethernet port, a destination node identification field contained in a layer higher than or equal to the Ethernet/IP layer, and the switch is further adapted to switch the incoming data packet to its second internal Ethernet port if the node identification field contains the node number in the redundant daisy chain network of the redundant power distribution unit and/or sensor unit where the switch forms part of, and to switch the incoming data packet to its third external Ethernet port if the node identification field contains a different node number.

Thus, in order to provide protection against a single point of failure in the daisy chain, spare PDUs and/or sensors may be foreseen. Each rack in the data centre may for instance be equipped with a secondary PDU. According to the present invention these secondary PDUs and/or sensors are also provided with a three-port switch, and the secondary PDUs/sensors are interconnected to form a secondary daisy chain. Also in the secondary daisy chain, a higher or equal layer node identification scheme is implemented such that the nodes in the secondary daisy chain become again remotely accessible through a single, or eventually two IP addresses. Just like the primary daisy chain, the secondary daisy chain enables remote monitoring and control of the secondary PDUs/sensor units in a highly efficient, i.e. with high throughput and low latency, and flexible manner, i.e. via a single type of connection/protocol that is also used for direct connectivity to the external world, i.e. Ethernet connectivity. The functionality that is required to inspect the higher or equal layer node identification field in received data packets, may be implemented in software or hardware, e.g. a processor, a microcontroller, an FPGA or ASIC, and integrated with the three-port switch.

### Brief Description of the Drawings

Fig. 1 illustrates a first embodiment of the system for remotely monitoring and/or controlling a plurality of PDUs according to the present invention;
Fig. 2 illustrates a second embodiment of the system for remotely monitoring and/or controlling a plurality of PDUs according to the present invention; and
Fig. 3 is a functional block scheme of the discovery function 142 in the three port switch 114 that forms part of the first embodiment illustrated by Fig. 1.

### Detailed Description of Embodiment(s)

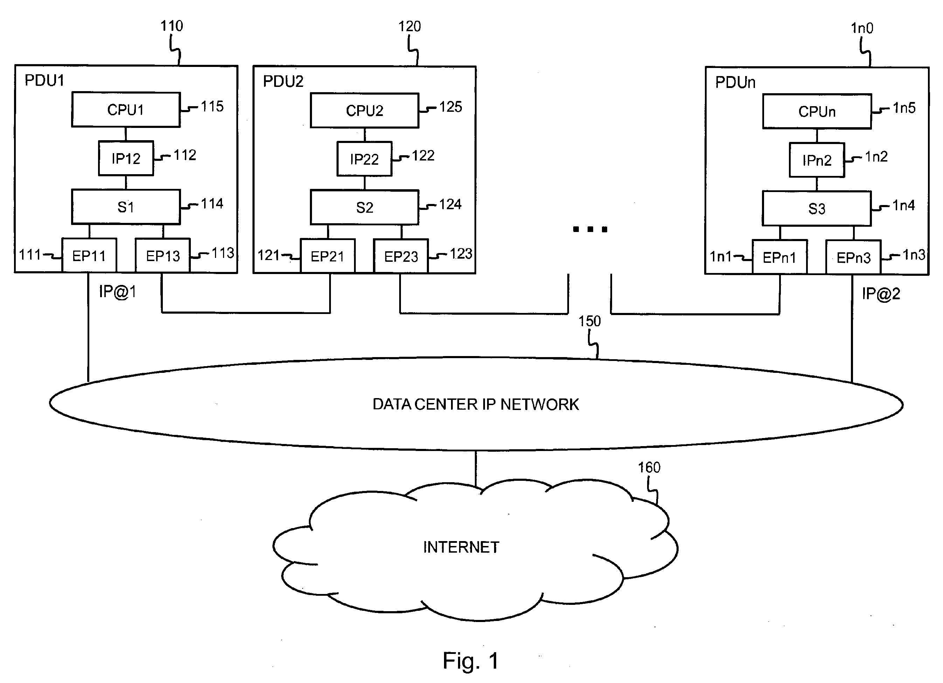

Fig. 1 shows a system in a data center comprising a data center IP network 150 and n power distribution units, PDU1 or 110, PDU2 or 120, ..., PDUn or 1n0. Each one of the PDUs is equipped with a power inlet and multiple power outlets for distributing power to servers in a data rack. Each one of the PDUs further incorporates remotely controllable intelligence to switch on/off individual power outlets, and current/voltage/power sensors may be integrated enabling to remotely meter various parameters. The power inlet, power outlets, remotely controllable intelligence and sensors are not drawn in Fig. 1. In addition thereto, as shown in Fig. 1, PDU1 comprises a switch S1 or 114 with first external Ethernet port EP11 or 111, second internal Ethernet port IP12 or 112, and third external Ethernet port EP13 or 113. PDU1 further comprises a processor CPU1 or 115 connected to the second internal Ethernet port 112. Similarly, PDU2 comprises a switch S2 or 124 with first external Ethernet port EP21 or 121, second internal Ethernet port IP22 or 122, and third external Ethernet port EP23 or 123. PDU2 further comprise a processor CPU2 or 125 connected to the second internal Ethernet port 122. Also PDUn comprises a switch Sn or 1 n4 with first external Ethernet port EPn1 or 1 n1, second internal Ethernet port IPn2 or 1 n2, and third external Ethernet port EPn3 or 1 n3. PDUn further comprises a processor CPUn or 1 n5 connected to the second internal Ethernet port 1 n2.

The PDUs, 110, 120, ..., 1n0, are interconnected to form a daisy chain network. Thereto, the third external Ethernet port 113 of the first PDU 110 is connected to the first external Ethernet port 121 of the second PDU 120, the third external Ethernet port 123 of the second PDU 120 is connected to the first external Ethernet port of a third PDU not shown in Fig. 1, ..., and the third external Ethernet port of the (n-1)'th PDU not shown in Fig. 1 is connected to the first external Ethernet port 1n1 of the n'th PDU 1n0. In addition, the first external Ethernet port 111 of the first PDU 110 is connected to the data center IP network 150 and configured with a first Internet Protocol address IP@1. Similarly, the third external Ethernet port 1 n3 of the n'th PDU 1n0, is connected to the data center IP network 150 and configured with a second Internet Protocol address IP@2. It is noticed that this last connection and the second IP address IP@2 are optional to the invention but advantageous because they provide a redundant possibility to reach the nodes in the daisy chain network in case the first IP address IP@1 is unavailable. The data center IP network 150 is further connected to the external Internet 160.

The configuration illustrated by Fig. 1 enables the data center operator to remotely control and/or meter all PDUs in the data center, over the Internet 160, via two IP addresses IP@1 and IP@2. The data center operator only has to be knowledgeable on the node numbers and node positions in the daisy chain. The node numbers than can be used in an address field at the Ethernet/IP layer or at an higher layer to address the distinct nodes in the daisy chain. Since the data center IP network 150 and the external Internet 160 use the same protocols, i.e. Ethernet/IP, no protocol conversions are involved in remotely controlling/metering the PDUs. The latency for controlling the PDUs in the system of Fig. 1 is therefore low in comparison to the situation where a gateway would be used in between the external Internet and an internal data center network. PDUs other than PDU1 and PDUn can also be configured with an IP address. This creates flexibility in case it is desired to address one or several additional PDUs directly.

In case the different PDUs in the system of Fig. 1 are knowledgeable on each others node numbers and positions in the daisy chain, internal communication between the PDUs in the data center is possible. Hence, even in a situation where no IP address would be assigned to any of the PDUs or sensors, the system according to the present invention would still provide an Ethernet bus in the data center that can be used for internal communications.

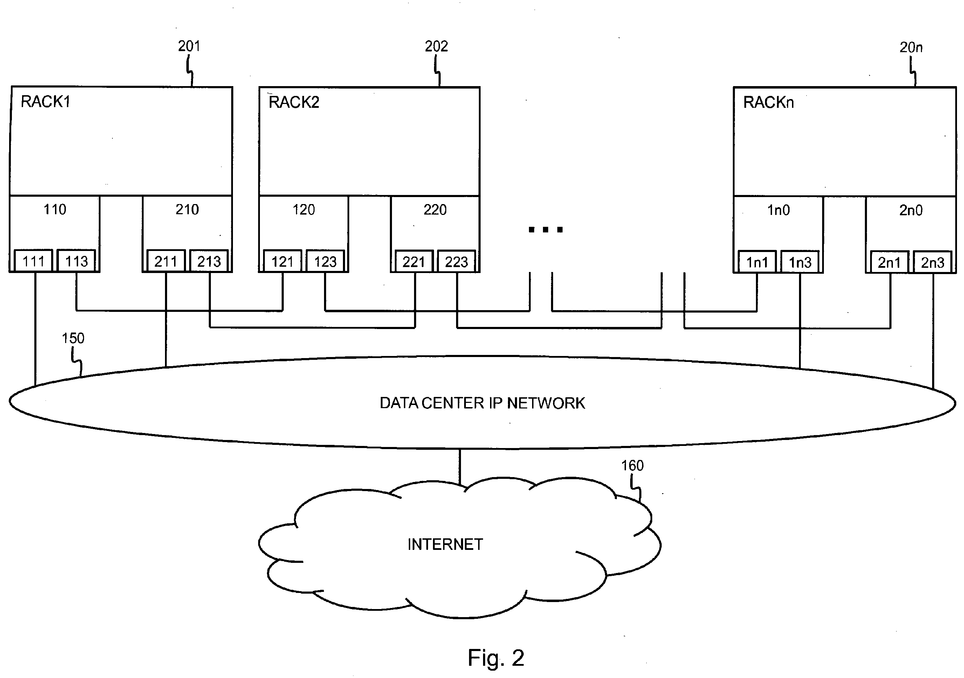

Fig. 2 shows a second embodiment of the present invention wherein the infrastructure of Fig. 1, i.e. the daisy chained PDUs 110, 120, ... 1n0 are used to power respective racks in a data center: PDU 110 powers the servers in RACK1 or 201, PDU 120 powers the servers in RACK2 or 202, ... PDU 1n0 powers the servers in RACKn or 20n. The external Ethernet ports of the PDUs 110, 120, ... 1n0 are daisy chained and labelled with the same reference numbers as in Fig. 1. One external Ethernet port 111 of PDU 110 and one external Ethernet port 1 n3 of PDU 1n0 are configured with respective first and second IP addresses to be accessible from the internet 160.

In addition to the PDUs 110, 120, ... 1n0, Fig. 2 shows that each rack is equipped with a second, redundant PDU: Rack 201 holds a second PDU 210, rack 202 holds a second PDU 220, ... rack 20n holds a second PDU 2n0. The redundant PDUs 210, 220, ... 2n0 in accordance with the present invention also incorporate a three-port Ethernet switch, the respective external Ethernet ports of which are drawn in Fig. 2: PDU 210 incorporates a switch with external Ethernet ports 211 and 213, PDU 220 incorporates a switch with external Ethernet ports 221 and 223, ... PDU 2n0 incorporates a switch with external Ethernet ports 2n1 and 2n3. The external Ethernet ports of these secondary PDUs 210, 220, ... 2n0 are interconnected to form a daisy chain network. In Fig. 2, the third external Ethernet port 213 of PDU 210 is connected to the first external Ethernet port 221 of PDU 220, the third external Ethernet port 223 of PDU 220 is connected to the first external Ethernet port of the next PDU in the daisy chain, not drawn in Fig. 2, ... and the third external port of the one but last PDU in the daisy chain, also not drawn in Fig. 2, is connected to the first external Ethernet port 2n1 of PDU 2n0. A skilled person will appreciate that first and third external Ethernet ports of the PDUs 210, 220, ..., 2n0 can interchangeable be used as a result of which alternate configurations are possible for the daisy chain. The first External port 211 of PDU 210 is configured with a third IP address to become directly accessible from the Internet 160 via data center IP network 150. Similarly, the third External Ethernet port 2n3 of PDU 2n0 is configured with a fourth IP address to become directly accessible from the Internet 160 via data center IP network 150.

The redundant PDUs 210, 220, ..., 2n0 in the secondary daisy chain are also remotely monitored and controlled in a highly efficient manner: since the protocol used in the internal network in the data center and the external network, i.e., the Internet, no protocol translations are needed, enabling low latency and high throughput. Also the secondary daisy chain offers the flexibility to directly address any one of the redundant PDUs provided such PDU is configured with an own IP address. The secondary PDUs 210, 220, ..., 2n0 provide a fall back for the primary PDUs 110, 120, ..., 1n0, or they may be used in combination with the primary PDUs 110, 120, ..., 1n0 in a load balanced mode when load balancing intelligence is present at rack level or data center level.

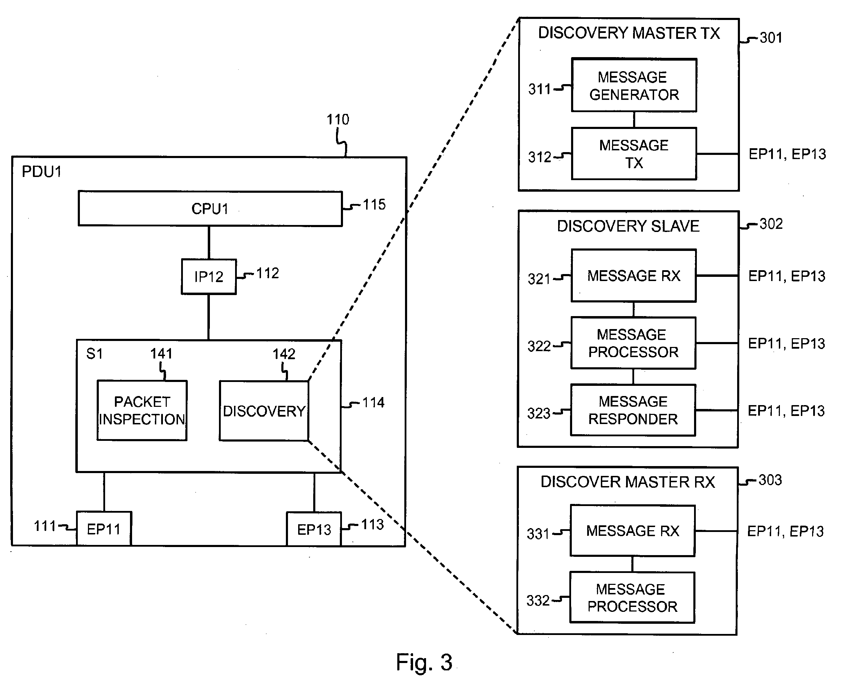

Essential to the present invention is the use of a higher or equal layer discovery mechanism that enables a master node in the daisy chain to discover the position and node number of the PDUs/sensors that are daisy chained. A possible implementation of the discovery functionality 142 that is integrated in the three port switch 114 of PDU 110 is illustrated by Fig. 3. The discovery function 142 comprises transmitter functionality 301 that is used when the PDU 110 is configured to be a master node in the daisy chain, receiver functionality 303 that is used when the PDU 110 is configured to be a master node in the daisy chain, and transceiver functionality 302 that is used when the PDU 110 is configured to be a slave node in the daisy chain.

When the PDU 110 is configured to be a master node in the daisy chain, message generator 311 shall generate discovery messages to sequentially discover the node number of the next hop node in the daisy chain. The discovery message contains an integer value that represents the position of the node in the daisy chain, counted as an amount of hops from the master node, whose node identification or node number the master node PDU1 desires to discover. The discovery message is transmitted by discovery message transmitter 312 via Ethernet port EP13 in the daisy chain. Upon receipt of a discovery message, the receiving node shall reduce the hop count value by one and forward the discovery message to the next hop in the daisy chain. When a node receives a discovery message whose hop count value is 1, that node shall no longer forward the discovery message but instead respond to the discovery message by reporting its node number. The response messages are received by message receiver 331 connected to port EP13, and handed over to message processor 332. The latter message processor 332 interprets the received response message, extracts the node number therefrom, and adds the node number to a list wherein position (i.e. the initial hop count value) and node identification (i.e. the node number) are inventorised.

Assuming that PDU 110 is configured as the master node in the daisy chain of Fig. 1, discovery function 142 shall sequentially learn the node numbers of PDU 120 ... PDU 1n0 by transmitting a first discovery message with initial hop count value 1, a second discovery message with initial hop count value 2, ... and an n'th discovery message with initial hop count value n.

When the PDU 110 on the other hand is configured to be a slave node in the daisy chain, it will receive discovery messages from the master node in the daisy chain. These discovery messages are received by discovery message receiver 321 via one of the external Ethernet terminals EP11 or EP13. Each received discovery message is processed by message processor 322. The message processor extracts the hop count value from the received discovery message. In case the hop count value is greater than one, the message processor 322 shall reduce the hop count value by one, and forward the received discovery message with reduced hop count value to the next node in the daisy chain. Thus, a discovery message received at terminal EP11 is forwarded at terminal EP13 with reduced hop count value, whereas a discovery message that is received at terminal EP13 is forwarded at terminal EP11 with reduced hop count value. In case the hop count value in the received discovery message is one, the message processor 322 instructs message responder 323 to prepare and send a response message to the master. The response message contains a node number or node identification of PDU 110. Upon receipt of the response message, the master node learns the node number of the node. The position of this node along the daisy chain is known by the master from the hop count value that was initially inserted by the master in the discovery message.

Although the discovery functionality for the master configuration and slave configuration are shown separately in Fig. 3, a skilled person will appreciate that the functionality described here above for generating, transmitting, receiving, processing and forwarding discovery messages and the functionality for generating, transmitting, receiving and processing the response messages can be integrated and handled by a single processor and single transceiver. This processor may further be integrated with the packet inspection processor 141 that forms part of three port switch 114. This packet inspection processor 141 handles incoming data packets, e.g. coming from the data center operator that remotely monitors/controls the PDU 110. The packet inspection processor 141 inspects a node identification field at a layer equal to or higher than the Ethernet/IP layer in the received packet. When the node number contained in the node identification field corresponds to the node number of PDU 110, the packet inspection processor 141 forwards the received data packet via internal Ethernet terminal 112 to the packet processor 115 or CPU1. When the node number contained in the node identification field of the received data packet does not correspond to the node number of PDU 110, the packet inspection processor 141 forwards the received data packet via external Ethernet terminal 113, assuming the data packet has been received at terminal 111, to the next node in the daisy chain.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system for remotely monitoring and/or controlling a plurality of power distribution units and/or sensor units (110, 120, ..., 1n0) in a data centre, said system comprising:
- in each one of said plurality of power distribution units and/or sensor units (110, 120, ..., 1n0) a switch (114, 124, ... 1 n4) having a first external Ethernet port (111, 121, ..., 1n1), a second internal Ethernet port (112, 122, ..., 1 n2), and a third external Ethernet port (113, 123, ..., 1 n3); and
- a daisy chain network comprising said plurality of power distribution units and/or sensor units (110, 120, ..., 1n0) as nodes, wherein said third external Ethernet port (113, 123, ...) of each node (110, 120, ..., 1n0) is connected to said first external Ethernet port (121, ... 1n1) of a following node in said daisy chain network,
and wherein furthermore:
- said switch (114, 124, ... 1 n4) in each one of said plurality of power distribution units and/or sensor units (110, 120, ..., 1n0) is adapted to inspect, in an incoming data packet received at its first external Ethernet port (111, 121, ..., 1 n1), a destination node identification field contained in a layer higher than or equal to the Ethernet/IP layer, and said switch (114, 124, ... 1n4) is further adapted to switch said incoming data packet to its second internal Ethernet port (112, 122, ..., 1 n2) if said node identification field contains the node number in said daisy chain network of the power distribution unit and/or sensor unit where said switch forms part of, and to switch said incoming data packet to its third external Ethernet port (113, 123, ..., 1 n3) if said node identification field contains a different node number.

2. A system for remotely monitoring and/or controlling a plurality of power distribution units and/or sensor units (110, 120, ..., 1n0) in a data centre according to claim 1, further comprising a discovery function (142) adapted to learn the node numbers of said nodes in said daisy chain network, said discovery function (142) comprising:
- a discovery message generator (311) adapted to generate a discovery message containing an integer hop count value;
- a discovery message transmitter (312) adapted to send said discovery message through said daisy chain network;
- a discovery message processor (322) in each one of said plurality of power distribution units and/or sensor units (110, 120, ..., 1n0), said discovery message processor (322) being adapted to receive said discovery message, to reduce said hop count value by one if said hop count value in said discovery message is larger than one, and to report the node number of the power distribution unit and/or sensor unit (110) where it forms part of if said hop count value in said discovery message equals one.

3. A system for remotely monitoring and/or controlling a plurality of power distribution units and/or sensor units (110, 120, ..., 1n0) in a data centre according to claim 1, wherein each one of said power distribution units and/or sensor units (110, 120, ..., 1n0) is configured with a node number, and a single one (110) of said power distribution units and/or sensor units is configured with an Internet Protocol (IP) address (IP@1).

4. A system for remotely monitoring and/or controlling a plurality of power distribution units and/or sensor units (110, 120, ..., 1n0) in a data centre according to claim 1, wherein each one of said power distribution units and/or sensor units (110, 120, ..., 1n0) is configured with a node number, and two (110, 1n0) of said power distribution units and/or sensor units are configured with respectively a first Internet Protocol (IP) address and a second Internet Protocol (IP) address (IP@1, IP@2).

5. A system for remotely monitoring and/or controlling a plurality of power distribution units and/or sensor units (110, 120, ..., 1n0) in a data centre according to claim 1, further comprising:
- a second plurality of redundant power distribution units and/or sensor units (210, 220, ... 2n0) as nodes;
- in each one of said second plurality of redundant power distribution units and/or sensor units (210, 220, ... 2n0) a switch having a first external Ethernet port (211, 221, ..., 2n1), a second internal Ethernet port, and a third external Ethernet port (213, 223, ..., 2n3); and
- a redundant daisy chain network comprising said second plurality of power distribution units and/or sensor units (210, 220, ... 2n0) as nodes, wherein said third external Ethernet port (213, 223, ...) of each node is connected to said first external Ethernet port (221, ... 2n1) of a following node in said redundant daisy chain network, and wherein furthermore:
- said switch in each one of said second plurality of power distribution units and/or sensor units (210, 220, ... 2n0) is adapted to inspect, in an incoming data packet received at its first external Ethernet port (211, 221, ..., 2n1), a destination node identification field contained in a layer higher than or equal to the Ethernet/IP layer, and said switch is further adapted to switch said incoming data packet to its second internal Ethernet port if said node identification field contains the node number in said redundant daisy chain network of the redundant power distribution unit and/or sensor unit where said switch forms part of, and to switch said incoming data packet to its third external Ethernet port (213, 223, ... 2n3) if said node identification field contains a different node number.

## Patentansprüche

1. System zur Fernüberwachung und/oder -steuerung einer Mehrzahl von Stromverteilungseinheiten und/oder Sensoreinheiten (110, 120, ..., 1n0) in einer Datenzentrale, wobei das System Folgendes umfasst:
- in jeder aus der Mehrzahl der Stromverteilungseinheiten und/oder Sensoreinheiten (110, 120, ..., 1n0) einen Switch (114, 124, ..., 1n4), der einen ersten externen Ethernet-Port (111, 121, ..., 1n1), einen zweiten internen Ethernet-Port (112, 122, ..., 1n2) und einen dritten externen Ethernet-Port (113, 123, ..., 1n3) hat; und
- ein verkettetes Netzwerk, das die Mehrzahl von Stromverteilungseinheiten und/oder Sensoreinheiten (110, 120, ..., 1n0) als Knoten umfasst, wobei der dritte externe Ethernet-Port (113, 123, ...) jedes Knotens (110, 120, ..., 1n0) mit dem ersten externen Ethernet-Port (121, ..., 1n1) eines darauf folgenden Knotens im verketteten Netzwerk verbunden ist, und wobei ferner:
- der Switch (114,124, ... 1n4) in jeder aus der Mehrzahl der Stromverteilungseinheiten und/oder Sensoreinheiten (110, 120, ..., 1n0) geeignet ist, in einem eingehenden Datenpaket, das an seinem ersten externen Ethernet-Port (111,121, ..., 1n1) empfangen wird, ein Zielknotenidentifikationsfeld zu prüfen, das in einer Schicht enthalten ist, die höher oder gleich der Ethernet-/IP-Schicht ist, und der Switch (114, 124, ... 1n4) ferner geeignet ist, das eingehende Datenpaket an seinen zweiten internen Ethernet-Port (112, 122, ..., 1n2) weiterzuleiten, wenn das Knotenidentifikationsfeld die Knotennummer im verketteten Netzwerk der Stromverteilungseinheit und/oder Sensoreinheit enthält, deren Teil der Switch ist, und das eingehende Datenpaket an seinen dritten externen Ethernet-Port (113, 123, ..., 1n3) weiterzuleiten, wenn das Knotenidentifikationsfeld eine andere Knotennummer enthält.

2. System zur Fernüberwachung und/oder -steuerung einer Mehrzahl von Stromverteilungseinheiten und/oder Sensoreinheiten (110, 120, ..., 1n0) in einer Datenzentrale nach Anspruch 1, ferner umfassend eine Erkennungsfunktion (142), die geeignet ist, die Knotennummern der Knoten im verketteten Netzwerk herauszufinden, wobei die Erkennungsfunktion (142) Folgendes umfasst:
- einen Erkennungsmeldungs-Generator (311), der geeignet ist eine Erkennungsmeldung, die einen ganzzahligen Hop-Count-Wert enthält, zu generieren;
- einen Erkennungsmeldungs-Transmitter (312), der geeignet ist, eine Erkennungsmeldung durch das verkettete Netzwerk zu senden;
- einen Erkennungsmeldungs-Prozessor (322) in jeder aus der Mehrzahl der Stromverteilungseinheiten und/oder Sensoreinheiten (110, 120, ..., 1n0), wobei der Erkennungsmeldungs-Prozessor (322) geeignet ist, eine Erkennungsmeldung zu empfangen, den Hop-Count-Wert um eins zu reduzieren, wenn der Hop-Count-Wert in der Erkennungsmeldung größer als eins ist, und, die Knotennummer der Stromverteilungseinheit und/oder Sensoreinheit (110) zu melden, deren Teil er ist, wenn der Hop-Count-Wert in der Erkennungsmeldung gleich eins ist.

3. System zur Fernüberwachung und/oder -steuerung einer Mehrzahl von Stromverteilungseinheiten und/oder Sensoreinheiten (110, 120, ..., 1n0) in einer Datenzentrale nach Anspruch 1, wobei jede der Stromverteilungseinheiten und/oder Sensoreinheiten (110, 120, ..., 1n0) mit einer Knotennummer konfiguriert ist und eine einzige (110) der Stromverteilungseinheiten und/oder Sensoreinheiten mit einer Internetprotokoll-(IP)-adresse (IP@1) konfiguriert ist.

4. System zur Fernüberwachung und/oder -steuerung einer Mehrzahl von Stromverteilungseinheiten und/oder Sensoreinheiten (110, 120, ..., 1n0) in einer Datenzentrale nach Anspruch 1, wobei jede der Stromverteilungseinheiten und/oder Sensoreinheiten (110, 120, ..., 1n0) mit einer Knotennummer konfiguriert ist und zwei (110, 1n0) der Stromverteilungseinheiten und/oder Sensoreinheiten mit einer ersten Internetprotokoll- (IP)-adresse bzw. einer zweiten Internetprotokoll-(IP)-adresse (IP@1, IP@2) konfiguriert sind.

5. System zur Fernüberwachung und/oder -steuerung einer Mehrzahl von Stromverteilungseinheiten und/oder Sensoreinheiten (110, 120, ..., 1n0) in einer Datenzentrale nach Anspruch 1, ferner umfassend:
- eine zweite Mehrzahl redundanter Stromverteilungseinheiten und/oder Sensoreinheiten (210, 220, ... 2n0) als Knoten;
- in jeder der redundanten Stromverteilungseinheiten und/oder Sensoreinheiten (210, 220, ... 2n0) der zweiten Mehrzahl einen Switch, der einen ersten externen Ethernet-Port (211, 221, ..., 2n1), einen zweiten internen Ethernet-Port und einen dritten externen Ethernet-Port (213, 223, ..., 2n3) hat; und
- ein redundantes verkettetes Netzwerk, dass eine zweite Mehrzahl von Stromverteilungseinheiten und/oder Sensoreinheiten (210, 220, ... 2n0) als Knoten umfasst, wobei der dritte externe Ethernet-Port (213, 223, ...) jedes Knotens mit dem ersten externen Ethernet-Port (221, ... 2n1) eines folgenden Knotens im redundanten verketteten Netzwerk verbunden ist, und wobei ferner:
- der Switch in jeder der zweiten Mehrzahl an Stromverteilungseinheiten und/oder Sensoreinheiten (210, 220, ... 2n0) geeignet ist, in einem eingehenden Datenpaket, das an seinem ersten externen Ethernet-Port (211, 221, ..., 2n1) empfangen wird, ein Zielknotenidentifikationsfeld zu prüfen, das in einer Schicht höher oder gleich der Ethernet-/IP-Schicht enthalten ist, und der Switch ferner geeignet ist, das eingehende Datenpaket an seinen zweiten internen Ethernet-Port weiterzuleiten, wenn das Knotenidentifikationsfeld die Knotennummer im redundanten verketteten Netzwerk der redundanten Stromverteilungseinheit und/oder Sensoreinheit enthält, deren Teil der Switch ist, und das Weiterleiten des eingehenden Datenpakets an seinen dritten externen Ethernet-Port (213, 223, ... 2n3), wenn das Knotenidentifikationsfeld eine andere Knotennummer enthält.

## Revendications

1. Un système pour contrôler et/ou commander à distance une pluralité de dispositifs de distribution et/ou détecteurs d'énergie électrique (110, 120, ..., 1n0) dans un centre de données, ledit système comprenant :
- dans chacun desdits dispositifs de distribution et/ou détecteurs d'énergie électrique (110, 120, ..., 1n0) un commutateur (114, 124, ..., 1n4) comprenant un premier port Ethernet externe (111, 121, ..., 1n1), un deuxième port Ethernet interne (112, 122, ..., 1n2), et un troisième port Ethernet externe (113, 123, ..., 1n3); et
- un réseau en « daisy chain » comprenant ladite pluralité de dispositifs de distribution et/ou détecteurs d'énergie électrique (110, 120, ..., 1n0) sous forme de noeuds, ledit troisième port Ethernet externe (113, 123, ...) de chaque noeud (110, 120, ..., 1n0) étant connecté audit premier port Ethernet externe (121, ... 1n1) d'un noeud suivant dans ledit réseau en daisy chain, et, de plus, dans lequel :
- ledit commutateur (114, 124, ..., 1n4) dans chacun de ladite pluralité dispositifs de distribution et/ou détecteurs d'énergie électrique (110, 120, ..., 1n0) étant adapté pour inspecter, dans un paquet de données entrant reçu à son premier port Ethernet externe (111, 121, ..., 1n1) un champ d'identification de noeud destinataire contenu à un niveau supérieur ou égal à celui du niveau Ethernet/IP, et ledit commutateur (114, 124, ..., 1n4) étant adapté, en outre, pour commuter ledit paquet de données entrant à son deuxième port Ethernet interne (112, 122, ..., 1n2), si ledit champ d'identification de noeud contient le numéro de noeud dans ladite réseau en daisy chain du dispositif de distribution et/ou détecteur d'énergie électrique, dont ledit commutateur fait partie, et pour commuter ledit paquet de données entrant à son troisième port Ethernet externe (113, 123, ..., 1n3) si ledit champ d'identification de noeud destinataire contient un numéro de noeud différent.

2. Un système pour contrôler et/ou commander à distance une pluralité de dispositifs de distribution et/ou détecteurs d'énergie électrique (110, 120, ..., 1n0) dans un centre de données selon la revendication 1, comprenant également une fonction de découverte (142) adaptée pour apprendre les numéros de noeud desdits noeuds dans ledit réseau en daisy chain, ladite fonction de découverte (142) comprenant :
- un générateur de message de découverte (311) adapté pour émettre un message de découverte contenant un nombre de sauts à chiffre entier
- un transmetteur de message de découverte (312) adapté pour transmettre ledit message de découverte par ledit réseau en daisy chain ;
- un processeur de message de découverte (322) dans chacun d'une pluralité de dispositifs de distribution et/ou détecteurs d'énergie électrique (110, 120, ..., 1n0), ledit processeur de message de découverte (322) étant adapté pour recevoir ledit message de découverte, pour réduire ladite valeur du nombre de sauts d'une unité si ladite valeur du nombre de sauts dans ledit message de découverte est supérieure à un, et pour communiquer le numéro de noeud du dispositif de distribution et/ou détecteur d'énergie électrique (110) dont il fait partie si ladite valeur du nombre de sauts dans ledit message de découverte est égale à un.

3. Un système pour contrôler et/ou commander à distance une pluralité de dispositifs de distribution et/ou détecteurs d'énergie électrique (110, 120, ..., 1n0) dans un centre de données selon la revendication 1, chacun desdits dispositifs de distribution et/ou détecteurs d'énergie électrique (110, 120, ..., 1n0) étant configuré avec un numéro de noeud, et un exemplaire unique (110) desdits dispositifs de distribution et/ou détecteurs d'énergie électrique étant configuré avec une adresse de protocole Internet (IP) (IP@1).

4. Un système pour contrôler et/ou commander à distance une pluralité de dispositifs de distribution et/ou détecteurs d'énergie électrique (110, 120, ..., 1n0) dans un centre de données selon la revendication 1, chacun desdits dispositifs de distribution et/ou détecteurs d'énergie électrique (110, 120, ..., 1n0) étant configuré avec un numéro de noeud, et deux (110, 1n0) desdits dispositifs de distribution et/ou détecteurs d'énergie électrique étant configurés avec respectivement une première adresse de protocole Internet (IP) et une deuxième adresse de protocole Internet (IP) (IP@1, IP@2).

5. Un système pour contrôler et/ou commander à distance une pluralité de dispositifs de distribution et/ou détecteurs d'énergie électrique (110, 120, ..., 1n0) dans un centre de données selon la revendication 1, comprenant en outre :
- une deuxième pluralité de dispositifs de distribution et/ou détecteurs d'énergie électrique (210, 220, ..., 2n0) redondants en tant que noeuds ;
- dans chacun de ladite pluralité de dispositifs de distribution et/ou détecteurs d'énergie électrique (210, 220, ..., 2n0) redondants, un commutateur possédant un premier port Ethernet externe (211, 221,..., 2n1), un deuxième port Ethernet interne, et un troisième port Ethernet externe (213, 223, ..., 2n3); et
- un réseau en « daisy chain » redondant comprenant ladite deuxième pluralité de dispositifs de distribution et/ou détecteurs d'énergie électrique (210, 220, ..., 2n0) sous forme de noeuds, ledit troisième port Ethernet (213, 223, ...) de chaque noeud étant connecté audit premier port Ethernet (211, 221, ... 2n1) d'un noeud suivant dans ledit réseau en daisy chain redondant, et, de plus, dans lequel :
- ledit commutateur dans chacun de ladite pluralité de dispositifs de distribution et/ou détecteurs d'énergie électrique (210, 220, ..., 2n0) étant adapté pour inspecter, dans un paquet de données entrant reçu à son premier port Ethernet externe (211, 221, ..., 2n1) un champ d'identification de noeud destinataire contenu à un niveau supérieur ou égal à celui du niveau Ethernet/IP, et ledit commutateur étant adapté en outre pour commuter ledit paquet de données entrant à son deuxième port Ethernet interne si ledit champ d'identification de noeud contient le numéro de noeud dans ledit réseau en daisy chain redondant du dispositif de distribution et/ou détecteur d'énergie électrique redondant, dont ledit commutateur fait partie, et pour commuter ledit paquet de données entrant à son troisième port Ethernet externe (213, 223, ..., 2n3) si ledit champ d'identification de noeud contient un numéro de noeud différent.
